(19) Europäisches Patentamt
European Patent Office
Office européen des brevets

(11) Veröffentlichungsnummer : **0 097 861**
**B1**

(12) # EUROPÄISCHE PATENTSCHRIFT

(45) Veröffentlichungstag der Patentschrift : **05.03.86**

(51) Int. Cl.⁴ : **C 08 G 63/64**, C 08 G 63/22

(21) Anmeldenummer : **83105763.3**

(22) Anmeldetag : **13.06.83**

(54) **Aromatische Polyestercarbonate mit hoher Kerbschlagzähigkeit und Verfahren zu ihrer Herstellung.**

(30) Priorität : **26.06.82 DE 3223980**

(43) Veröffentlichungstag der Anmeldung : **11.01.84 Patentblatt 84/02**

(45) Bekanntmachung des Hinweises auf die Patenterteilung : **05.03.86 Patentblatt 86/10**

(84) Benannte Vertragsstaaten : **DE FR GB IT NL**

(56) Entgegenhaltungen :
**FR-A- 2 252 367**
**FR-A- 2 514 012**

(73) Patentinhaber : **BAYER AG**
**Konzernverwaltung RP Patentabteilung**
**D-5090 Leverkusen 1 Bayerwerk (DE)**

(72) Erfinder : **Freitag, Dieter, Dr.**
**Hasenheide 10**
**D-4150 Krefeld (DE)**
Erfinder : **Bottenbruch, Ludwig, Dr.**
**Wöhlerstrasse 5**
**D-4150 Krefeld (DE)**
Erfinder : **Schmidt, Manfred, Dr.**
**Bodelschwinghstrasse 20**
**D-4150 Krefeld (DE)**

**EP 0 097 861 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft aromatische Polyestercarbonate mit erhöhter Kerbschlagzähigkeit und ein Verfahren zu ihrer Herstellung durch Eindampfen von Lösungen, die sowohl aromatischen Polyester als auch aromatisches Polycarbonat enthalten.

Aromatische Polyestercarbonate sind bekannt (G.S. Kolesnikov et. al., J. Polym. Sci. USSR, Vol. 9, 1705-1711 (1967) ; US 3 030 331, 3 169 121, 3 409 704, DE-OS 2 714 544, 2 758 030, 3 007 934). Sie werden vorzugsweise nach dem Zweiphasengrenzflächenverfahren aus Diphenolat, Dicarbonsäuredichlorid und Phosgen hergestellt.

Während z. B. die Coextrusion aromatischer Polyester und aromatischer Polycarbonate zu Polyester/Polycarbonat-Legierungen führt (vgl. z. B. DE-OS 2 211 202, US 3 398 212, 3 399 172), findet überraschenderweise in Gegenwart von Lösungsmitteln bei hohen Temperaturen eine Umesterung statt. Das erfindungsgemäße Verfahren stellt eine elegante Methode der Herstellung aromatischer Polyestercarbonate dar.

Gegenstand der Erfindung ist ein Verfahren zur Herstellung aromatischer Polyestercarbonate mit einem molaren Verhältnis von Ester- zu Carbonatgruppen von 20 : 1 bis 1 : 20, vorzugsweise von 9 : 1 bis 2 : 8, dadurch gekennzeichnet, daß man eine lösungsmittelhaltige Mischung, die a) aromatischen Polyester und b) aromatisches Polycarbonat im gewünschten Verhältnis und 5 bis 80, vorzugsweise 20 bis 70, Gew.-% organisches Lösungsmittel (bezogen auf lösungsmittelhaltige Mischung) enthält, unter Abzug des Lösungsmittels — gegebenenfalls unter vermindertem Druck — vorzugsweise beginnend in einem Temperaturbereich von 150 bis 280 °C, insbesondere von 200 bis 260 °C — unter Aufrechterhaltung des flüssigen Zustands auf eine Temperatur von 300 bis 420 °C, vorzugsweise von 310 bis 360 °C, erhitzt, bis das Reaktionsprodukt nur noch eine Glasübergangstemperatur aufweist.

Der Lösungsmittelgehalt der Mischung kann durch eine vorgeschaltete Eindampfung vermindert werden. Die Umesterung wird zweckmäßigerweise in einem Kneter oder Ausdampfextruder durchgeführt. Unter intensivem Mischen werden — vorzugsweise kontinuierlich — die Temperatur erhöht und der Druck gesenkt. Vorteilhaft läßt sich das Verfahren in mehreren Stufen durchführen, wobei man in der ersten Stufe die Mischung unter Normaldruck oder vermindertem Druck bis auf ca. 5 Gew.-% vom Lösungsmittel befreit und anschließend in der letzten Behandlungszone — vorzugsweise in einem Extruder mit Entgasungsstutzen — bei vermindertem Druck das restliche Lösungsmittel entfernt. In der Regel ist nach einer Verweilzeit von 20 bis 200 sec., vorzugsweise von 25 bis 120 sec., in der letzten Behandlungszone die Umesterung vollständig. Die Opaleszenz, die durch die unterschiedlichen Brechungsindices der beiden Ausgangspolykondensate zustande kommt, verschwindet im Laufe der Reaktion. Nach erfolgter Umesterung zeigt das Auftreten einer einzigen Glasübergangstemperatur an, daß aus der eingesetzten Mischung ein Mischkondensat entstanden ist. Verglichen mit nach dem Zweiphasengrenzflächenverfahren hergestellten aromatischen Polyestercarbonaten, weisen die erfindungsgemäß hergestellten aromatischen Polyestercarbonate deutlich erhöhte Kerbschlagzähigkeit und Fließfähigkeit auf.

Die Glasübergangstemperatur kann beispielsweise durch Schubmodulmessungen an aus Lösungen hergestellten Folien bestimmt werden.

Für das erfindungsgemäße Verfahren bevorzugte Extruder werden z. B. in der DE-OS 1 404 984 und in den DE-AS 1 209 741 (Beispiele) und 1 404 237 beschrieben.

Für das erfindungsgemäße Verfahren bevorzugte organische Lösungsmittel sind beispielsweise Methylenchlorid, Chloroform, Tetrachlorethane, Trichlorethylen, Tetrachlorethylen, Chlorbenzol, Dichlorbenzol, Toluol, Xylol, Anisol, oder deren Mischungen (vgl. DE-OS 1 570 533, 1 595 762, 2 116 974, 2 113 345, 2 500 092, GB 1 079 821 und US 3 511 514).

Aromatische Polyester (a) im Sinne der Erfindung sind Polyester enthaltend Iso- und/oder Terephthalsäurereste, Diphenolreste, Reste von Kettenabbrechern und gegebenenfalls von Verzweigungsmitteln mit relativen Viskositäten von 1,18 bis 2,0, vorzugsweise von 1,2 bis 1,5 (gemessen an einer Lösung von 0,5 g Polyester in 100 ml Dichlormethan-Lösung bei 25 °C). Sie werden z. B. in der Monographie « Polyester » von V.V. Korshak und S.V. Vinogradova, Pergamon Press, Oxford 1965, S. 494, 485-486, 454-455 beschrieben.

Bevorzugte Diphenole für die Herstellung der aromatischen Polyester (a) sind Verbindungen der Formel

$$HO—Z—OH \qquad (I)$$

worin Z einen zweiwertigen ein- oder mehrkernigen aromatischen Rest mit 6-30 C-Atomen bedeutet, wobei Z derart gebaut ist, daß die beiden OH-Gruppen direkt an je ein C-Atom des aromatischen Systems gebunden sind.

Besonders bevorzugte Diphenole sind Verbindungen der Formel

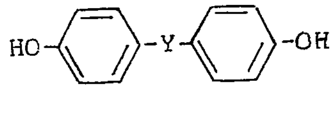

(II)

in der Y eine Einfachbindung, einen Alkylen- oder Alkylidenrest mit 1-7 C-Atomen, einen Cycloalkylen- oder Cycloalkylidenrest mit 5-12 C-Atomen,

$$-O-,\ -S-,\ -\underset{\underset{O}{\|}}{S}-,\ -SO_2-,$$

oder

$$-\underset{\underset{O}{\|}}{C}-$$

bedeutet,
sowie deren kernalkylierte und kernhalogenierte Derivate z. B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α, α'-Bis-(hydroxyphenyl)-diisopropylbenzole

sowie deren kernalkylierte und kernhalogenierte Verbindungen. Diese und weitere geeignete Diphenole sind z. B. in den US-Patentschriften 3 028 365, 3 275 601, 3 148 172, 3 062 781, 2 991 273, 3 271 367, 2 999 835, 2 970 131 und 2 999 846, in den deutschen Offenlegungsschriften 1 570 703, 2 063 050, 2 063 052, 2 211 956, 2 211 957, der franz. Patentschrift, 1 651 518 und in der Monographie H. Schnell, « Chemistry and Physics of Polycarbonates », Interscience Publishers, New York 1964, beschrieben.

Die wichtigsten Diphenole seien nachfolgend namentlich aufgezählt :

Bisphenol A, Tetramethylbisphenol A, 1,1-Bis-(4-hydroxyphenyl)-isobutan, 1,1-Bis-(4-hydroxyphenyl)-cyclohexan, 4,4'-Dihydroxydiphenylsulfid, 4,4'-Dihydroxydiphenyl, 4,4'-Dihydroxydiphenylsulfon sowie deren di- und tetrahalogenierte Derivate. Besonders bevorzugt ist Bisphenol A. Es können auch beliebige Mischungen der vorgenannten Diphenole verwendet werden.

Bevorzugte aromatische Polyester (a) enthalten Iso- und Terephthalsäurereste im Verhältnis 7 : 3 bis 3 : 7, vorzugsweise etwa 1 : 1.

Aromatische Polycarbonate (b) im Sinne der Erfindung sind Homo- und Copolycarbonate auf Basis der Diphenole I bzw. II, Phosgen, Kettenabbrechern und gegebenenfalls Verzweigungsmitteln und mit einem als Gewichtsmittel bestimmten Molekulargewicht $\bar{M}_w$ von 10 000 bis 200 000, vorzugsweise von 20 000 bis 80 000, ermittelt durch Lichtstreuung.

Außer den oben für die Herstellung der Polyester (a) genannten Diphenole sind für die Herstellung der Polycarbonate (b) die folgenden Diphenole besonders bevorzugt : 2,4-Bis-(4-hydroxyphenyl)-2-methylbutan, 2,2-Bis-(3-methyl-4-hydroxyphenyl)-propan, 2,2-Bis-(3,5-dimethyl-4-hydroxyphenyl)-propan und α, α'-Bis-(4-hydroxyphenyl)-p-diisopropylbenzol. Bevorzugte Polycarbonate (b) sind Copolycarbonate auf Basis von Bisphenol A und einem der oben als bevorzugt genannten Diphenole ; besonders bevorzugt sind Polycarbonate, die als Diphenolreste nur Bisphenol-A-reste enthalten.

Die erfindungsgemäß hergestellten Polyestercarbonate finden vornehmlich zur Herstellung von Formkörpern Verwendung, die hohe Wärmeformbeständigkeit und hohe Kerbschlagzähigkeit aufweisen sollen, z. B. Steckerleisten, Lampenhalterungen, Scheinwerfergehäuse.

Die Verarbeitung erfolgt in der Regel durch Spritzguß bei Massetemperaturen von 280 bis 360 °C und bei Formtemperaturen von 100 bis 200 °C.

## Beispiele

Der in den nachfolgenden Beispielen in Form seiner 10 gew.-%igen Lösung in Methylenchlorid/Chlorbenzol (Gewichtsverhältnis 1 : 1) eingesetzte aromatische Polyester « APE » ist ein Polyester aus Bisphenol-A, Iso- und Terephthalsäure (Molverhältnis Iso-/Terephthalsäure = 1/1) sowie p-tert. Butylphenol als Kettenabbrecher mit einer relativen Lösungsviskosität $\eta_{rel}$ = 1.301, gemessen in 0,5 gew.-%iger Lösung in Methylenchlorid bei 25 °C.

Das in den nachfolgenden Beispielen in Form seiner 10 gew.-%igen Lösung in Methylenchlorid/Chlorbenzol (Gewichtsverhältnis 1 : 1) eingesetzte Polycarbonat « PC » ist ein Polycarbonat aus Bisphenol-A, Phosgen und p-tert. Butylphenol als Kettenabbrecher mit einer relativen Lösungsviskosität $\eta_{rel}$ = 1.300, gemessen in 0,5 gew.-%iger Lösung in Methylenchlorid bei 25 °C.

Die Prüfung der Kerbschlagzähigkeit $a_k$ nach Charpy erfolgte an Normkleinstäben gemäß DIN 53 453 bei 23 °C jeweils an 10 Prüfkörpern. Die Messung der Wärmeformbeständigkeit erfolgte durch

Bestimmung der Vicat-B-Erweichungstemperatur gemäß DIN 53 460. Die Fließfähigkeit der Polymeren in der Schmelze wird durch Messung des Schmelzindex (MFI) bei 320 °C und 21,6 kg Belastung gemäß DIN 53 735 beurteilt.

Beispiele 1-4

Aus 10 gew.-%igen Lösungen von Polyester « APE » und Polycarbonat « PC » wurde auf einem Doppelwellen-Ausdampfextruder aromatisches Polyestercarbonat hergestellt. Die Temperatur im letzten Vakuumextrusionsteil betrug 320 °C.

Vergleichsbeispiele 1-2

Polyester « APE » und Polycarbonat « PC » wurden in Form ihrer Granulate gemischt und bei 360 °C auf einem Vakuum-Doppelwellenextruder extrudiert.

(Siehe Tabelle Seite 5 f.)

Eigenschaften der extrudierten Produkte

| Beispiel | Gew.-verhältnis APE/PC | mittl. Verweilzeit [sec] | Vicat-B [°C] | $a_k$ [kJ/m²] | St.d.T.* $a_k$ [kJ/m²] | $\eta_{rel}$ | MFI [g/10 Min] | $T_g$ [°C] |
|---|---|---|---|---|---|---|---|---|
| 1 | 80/20 | 80 | 182 | 28 | 19 | 1.297 | 36 | 190 |
| 2 | 60/40 | 80 | 173 | 29 | 21 | 1.299 | 57 | 178 |
| 3 | 30/70 | 70 | 161 | 35 | 27 | 1.296 | 134 | 161 |
| 4 | 90/10 | 110 | 185 | 25 | | 1.301 | 20 | 193 |
| Vergl. | | | | | | | | |
| 1 | 80/20 | 90 | 177 | 26 | | 1.298 | 29 | 157;198 |
| 2 | 60/40 | 75 | 168 | 28 | | 1.292 | 53 | 153;184 |

* Kerbschlagzähigkeit von Polyestercarbonaten, die nach Stand der Technik aus Bisphenol A, Iso- und Terephthalsäuredichloriden (1 : 1) sowie Phosgen nach dem Phasengrenzflächenverfahren hergestellt wurden, mit unterschiedlichen Mengen an Carbonatstrukturen.

**Patentansprüche**

1. Verfahren zur Herstellung aromatischer Polyestercarbonate mit einem molaren Verhältnis von Ester zu Carbonatgruppen von 20 : 1 bis 1 : 20, dadurch gekennzeichnet, daß man eine lösungsmittelhaltige Mischung, die a) aromatischen Polyester und b) aromatisches Polycarbonat im gewünschten Verhältnis und 5 bis 80 Gew.-% organisches Lösungsmittel (bezogen auf lösungsmittelhaltige Mischung) enthält, unter Abzug des Lösungsmittels — gegebenenfalls unter vermindertem Druck — und unter Einwirkung von Scherkräften — vorzugsweise beginnend in einem Temperaturbereich von 150 bis 280 °C — unter Aufrechterhalten des flüssigen Zustands auf eine Temperatur von 300 bis 420 °C, erhitzt, bis das Reaktionsprodukt nur noch eine Glasübergangstemperatur aufweist.

2. Verfahren nach Anspruch 1, dadurch gekennzeichnet, daß die lösungsmittelhaltige Mischung 20-70 Gew.-% organisches Lösungsmittel enthält.

3. Verfahren nach Ansprüchen 1 und 2, dadurch gekennzeichnet, daß man das Verfahren in einem Temperaturbereich von 200 bis 260 °C beginnt.

4. Verfahren nach Ansprüchen 1-3, dadurch gekennzeichnet, daß man die Reaktionsmischung auf 310 bis 360 °C erhitzt.

5. Verfahren nach Anspruch 1-4, dadurch gekennzeichnet, daß das Lösungsmittel aus der Reihe Methylenchlorid, Chloroform, Tetrachlorethane, Trichlorethylen, Tetrachlorethylen, Chlorbenzol, Dichlorbenzol, Toluol, Xylol, Anisol und deren Mischungen ausgewählt ist.

6. Nach Verfahren gemäß Ansprüchen 1-5 hergestellte Polyestercarbonate.

**Claims**

1. A process for the production of aromatic polyester carbonates having a molar ratio of ester to carbonate groups of from 20 : 1 to 1 : 20, characterised in that a solvent-containing mixture which contains (a) aromatic polyester and (b) aromatic polycarbonate in the required ratio, and from 5 to 80 %, by weight, of organic solvent (based on solvent-containing mixture) is heated to a temperature of from 300 to 420 °C while drawing off the solvent — optionally under reduced pressure — and under the influence of shearing forces — preferably commencing in a temperature range of from 150 to 280 °C — while maintaining the liquid state, until the reaction product only has one glass transition temperature.

2. A process according to claim 1, characterised in that the solvent-containing mixture contains from 20 to 70 %, by weight, of organic solvent.

3. A process according to claims 1 and 2, characterised in that the process commences in a temperature range of from 200 to 260 °C.

4. A process according to claims 1 to 3, characterised in that the reaction mixture is heated to from 310 to 360 °C.

5. A process according to claims 1 to 4, characterised in that the solvent is selected from the series comprising methylene chloride, chloroform, tetrachloroethane, trichloroethylene, tetrachloroethylene, chlorobenzene, dichlorobenzene, toluene, xylene, anisole and mixtures thereof.

6. Polyester carbonates produced by the process according to claims 1 to 5.

**Revendications**

1. Procédé de préparation de polyester-carbonates aromatiques à un rapport molaire de 20 : 1 à 1 : 20 entre les groupes ester et les groupes carbonate, caractérisé en ce que l'on chauffe un mélange dans un solvant contenant a) un polyester aromatique et b) un polycarbonate aromatique aux proportions relatives voulues et 5 à 80 % en poids de solvant organique (par rapport au mélange contenant le solvant), avec élimination du solvant — éventuellement sous vide — et sous l'action de forces de cisaillement — de préférence en commençant dans un intervalle de température de 150 à 280 °C — en maintenant l'état liquide, à une température de 300 à 420 °C, jusqu'à ce que le produit de réaction ne présente plus qu'une seule température de transition du second ordre.

2. Procédé selon la revendication 1, caractérisé en ce que le mélange dans le solvant contient 20 à 70 % en poids de solvant organique.

3. Procédé selon les revendications 1 et 2, caractérisé en ce que l'on commence l'opération dans un intervalle de température de 200 à 260 °C.

4. Procédé selon les revendications 1 à 3, caractérisé en ce que l'on chauffe le mélange de réaction à une température de 310 à 360 °C.

5. Procédé selon les revendications 1 à 4, caractérisé en ce que le solvant est choisi dans le groupe formé par le chlorure de méthylène, le chloroforme, les tétrachloréthanes, le trichloréthylène, le tétrachloréthylène, le chlorobenzène, le dichlorobenzène, le toluène, le xylène, l'anisole et leurs mélanges.

6. Les polyester-carbonates préparés par le procédé selon les revendications 1 à 5.